# EUROPEAN PATENT SPECIFICATION

(11) **EP 1 773 464 B1**
(45) Date of publication and mention of the grant of the patent: **03.12.2008**
(21) Application number: 05776024.1
(22) Date of filing: 25.07.2005
(51) Int. Cl.: B01D 35/20

(54) **FUEL FILTER WITH ANTIFREEZE DEVICE**
KRAFTSTOFFFILTER MIT GEFRIERSCHUTZVORRICHTUNG
FILTRE A CARBURANT PRESENTANT UN DISPOSITIF ANTIGEL

(30) Priority: 03.08.2004 IT RE20040009
(43) Date of publication of application: 18.04.2007
(73) Proprietor: UFI Filters S.p.A., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2005/008138
(87) International publication number: WO 2005/118105

(56) References cited:
- EP-A- 1 087 128
- WO-A-03/076792
- WO-A-03/076793
- GB-A- 2 371 246

## Description

### TECHNICAL FIELD

The present invention relates in a general sense to a fuel filter for internal combustion engines, and in particular to a diesel fuel filter to be associated with diesel engines.

### PRIOR ART

Diesel engine fuel is known to normally contain impurities, because of which the diesel engine feed system has to be provided with a suitable fuel filter.

Modern diesel fuel filters generally consist of a cup-shaped body closed by a cover and containing a coaxial filter cartridge generally of toroidal shape.

Between the cartridge and the cup-shaped body there are defined two chambers for passage of the diesel fuel to be filtered and of the filtered diesel fuel respectively, the first connected to the pump unit and the second to the injection system.

The chamber for passage of the diesel fuel to be filtered is normally provided by the inner region of the filter cartridge.

In addition to said impurities, diesel fuel also generally contains waxy materials, such as paraffin, which tend to thicken at relatively low temperatures, of the order of -5°C, until they solidify at lower temperatures, of the order of -20/25°C.

Hence, if the engine remains inactive for a certain time at very low temperatures, said waxy materials such as paraffin separate from the diesel fuel and solidify, with consequent clogging of the filter, making it impossible to operate the engine.

Document GB 2371246A describes a filter with an ultrasonic generator, said filter being cleaned by a combination of ultrasound vibrations and bockwashing with a filtrate.

### DISCLOSURE OF THE INVENTION

The object of the present invention is to overcome this type of drawback by providing a fuel filter fitted with a device for preventing or delaying paraffin aggregation.

For this purpose, filters are already known and currently used, provided with heating devices disposed within the chamber of the diesel fuel to be filtered. The purpose of said devices, which can also be of disposable or once-only use type, is to heat the diesel fuel present in said chamber, to raise it to a temperature such as to cause the paraffin to melt, at least at the moment of starting the engine.

The filter of the present invention proposes to solve the said technical problem without using any heat source, by a device able to effectively replace known heating devices.

Another object of the invention is to attain said object within the context of a simple, rational, reliable and economical construction of small overall size.

The invention attains said object by virtue of the characteristics defined in the claims.

Specifically, the invention provides a fuel filter with antifreeze device comprising an outer casing, the interior of which is separated by a filtering baffle into two separate chambers to which a fuel inlet conduit and a fuel outlet conduit are connected respectively; said filter further comprising a device for generating pressure waves within the outer casing, such that said pressure waves propagate at least through the fuel contained in the filter interior.

By this solution, the diesel fuel molecules contained in the filter, and with them the molecules of the waxy substances dissolved in it, are made to vibrate, so increasing their kinetic energy and hence preventing aggregation of the constituent paraffin long molecular chains.

In a preferred embodiment of the invention, said device is at least partly housed within the filter casing, inside the chamber of the diesel fuel to be filtered.

Specifically, in said embodiment the device is preferably removably associated with a hole provided in the filter cover, to present a portion contained within the chamber of the diesel fuel to be filtered, and a portion projecting to the outside.

By virtue of this solution, in addition to enabling the pressure waves to propagate through the diesel fuel contained in the filter, the device is made easily accessible, so simplifying mounting, replacement and maintenance operations.

According to the invention, the device comprises generator means for generating the pressure waves, and activation means for activating said generator means when the conditions (low temperature) requiring their use occur.

Said generator means can be of mechanical or electronic type; in the first case said means comprise an electric motor rotating an eccentric mass to produce a vibration which itself generates the pressure waves; in the second case said generator means comprise an ultrasound emitter, or alternatively a piezoelectric device, both being able to transform an electric pulse into a mechanical wave, although utilizing different operating principles,

The activation means comprise a temperature sensor able to measure the temperature of the diesel fuel within the filter and to generate a corresponding electrical signal, and a processor for said signal which activates said generator means when a minimum temperature threshold value is attained, so making the operation of the device completely automatic.

In a embodiment which is not a part of the present invention, which is conveniently very economical, said activation means instead comprise a switch, associated with the device, to be operated manually when said generator means are to be activated.

An improvement in this latter arrangement consists of using, instead of the manual switch, a remotely controlled switch which makes the device operable from a distance.

As the device requires a source of electrical energy for its operation, in a preferred embodiment of the invention said device comprises an electrical generator, in particular an alkaline battery; in this manner the device operation is completely independent and hence easy to manage.

In another alternative embodiment the device is powered by the vehicle electrical system.

Finally, according to the invention, the device comprises an outer jacket for containing and housing said generator means, so protecting them from the high pressures which, present within the diesel fuel inlet chamber, could damage them.

Preferably said outer jacket also contains the activation means and, if present, also the electrical generator, so that the device represents a single unit which can be advantageously constructed independently of the filter and mounted thereon only afterwards, so facilitating its replacement and maintenance.

The dependent claims define particularly advantageous preferred embodiments of the fuel filter according to the invention.

### BRIEF DESCRIPTION OF THE DRAWINGS

Further characteristics and advantages of the invention will be apparent on reading the ensuing description provided by way of non-limiting example, with the aid of the figures shown in the accompanying drawings, in which:
Figure 1 is a longitudinal section through a filter according to the invention;
Figure 2 is a longitudinal section through a device in accordance with a first embodiment of the invention;
Figure 3 is a longitudinal section through a device in accordance with a second embodiment of the invention;
Figure 4 shows the device of Figure 2 mounted in a manner conforming to a preferred embodiment of the invention;

### BEST MODE FOR CARRYING OUT THE INVENTION

Said figures show a diesel fuel filter 1 comprising an outer casing 2 provided with an inlet conduit 3 for the diesel fuel to be filtered and an outlet conduit 4 for the filtered diesel fuel.

The casing 2 comprises a cup-shaped body 20 closed by a cover 21.

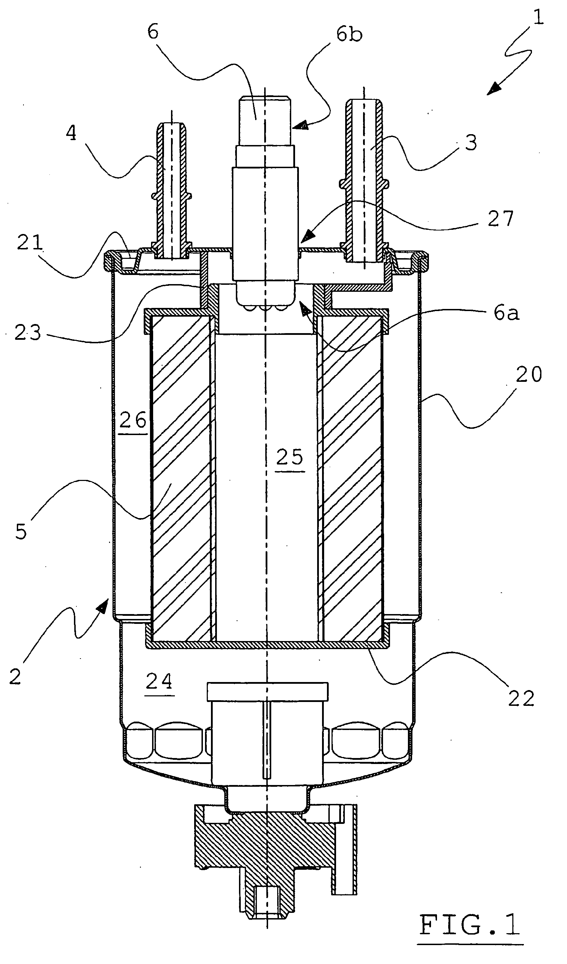

The interior of the casing 1 houses a toroidal filtering baffle 5, supported between a lower base 22 and an upper stub 23 which branches from the cover 21. Said filtering baffle 5 divides the interior 24 of the casing 1 into two separate chambers 25 and 26, of which the first, 25, is connected to the inlet conduit 3 for the diesel fuel to be filtered and the second, 26, to the outlet conduit 4 for the filtered diesel fuel (see Figure 1).

The diesel fuel filter 1 also comprises a device 6 for generating, within the casing 2, pressure waves which propagate through the diesel fuel contained in the interior 24, so increasing its kinetic energy.

As can be seen from Figure 1, to make this propagation possible, a part of the device 6 is housed within the casing 2, and specifically within the chamber 25 to which the inlet conduit 3 for the diesel fuel to be filtered is connected.

In detail (see Figure 1), the device 6 is removably associated with the outer casing 2 by being inserted through a hole 27 provided in the cover 21, such as to present a portion 6a housed within said chamber 25 for the diesel fuel to be filtered, and a portion 6b projecting to the outside.

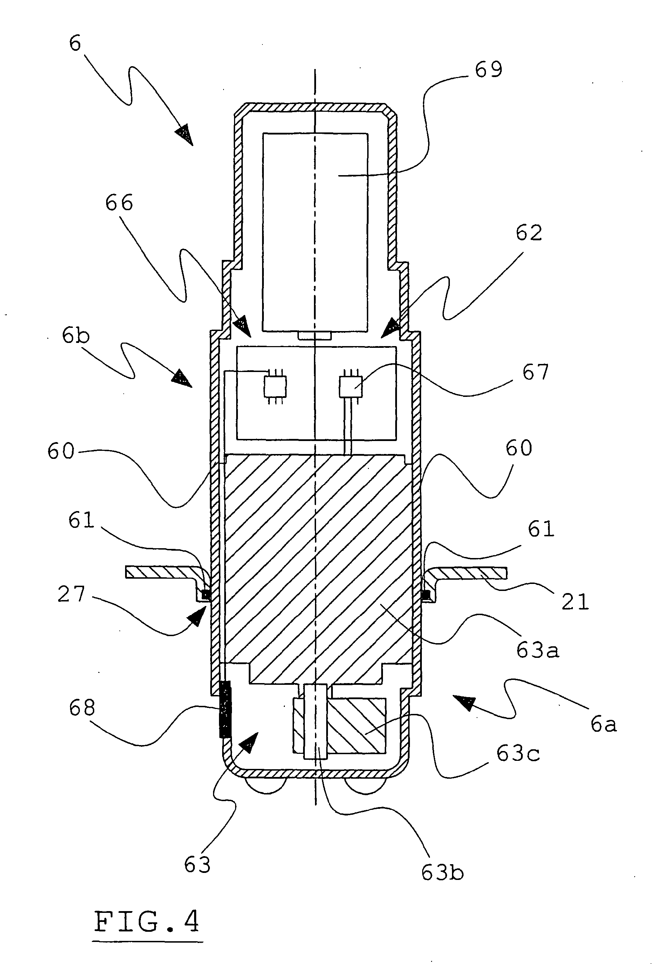

In a preferred embodiment of the invention (see Figure 4), the device 6 is associated with the casing 2 by way of an interposed elastic element, in particular an elastic ring 61, so that the generated pressure waves propagate only through the diesel fuel, to prevent also vibrating the casing 2 and hence the entire structure of the filter 1.

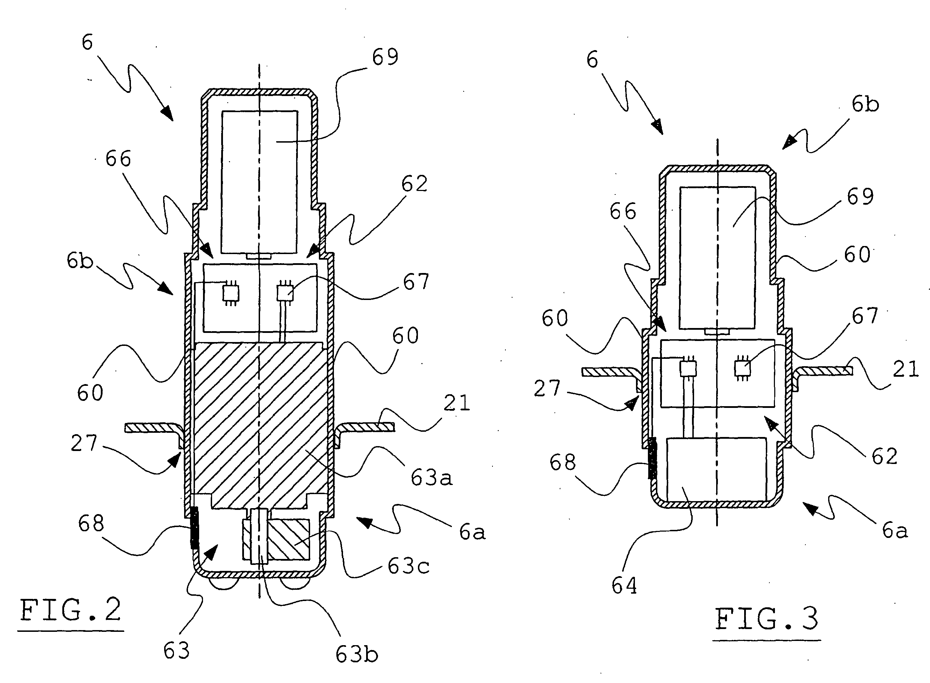

The device 6 (see Figures 2 and 3) comprises an outer jacket 60, of metal or polymer material, for containing generator means 63 or 64 for generating said pressure waves, activation means 62 for activating said generator means, and an electrical energy generator 69, in particular an alkaline battery, to power said generator means 63 or 64 and said activation means 62.

The generator means 63 or 64 are disposed within the outer jacket 60, specifically in correspondence with that portion 6a contained in the inlet chamber 25, such that the pressure waves generated thereby propagate through the interior 20 of the filter 1.

Figures 2 and 3 show two possible embodiments of said generator means: one 63 of mechanical type and the other 64 of electronic type.

Figure 2 shows the embodiment of mechanical type, in which said generator means 63 comprise an electric motor 63a provided with a projecting rotary shaft 63b, and an eccentric mass 63c keyed onto said rotary shaft 63b and rotated by the motor 63a; on rotating, said eccentric mass 63c produces vibration of the device 6, which in its turn generates pressure waves.

Figure 3 shows the embodiment of electronic type, in which said generator means comprise a piezoelectric device 64 which transforms an electric pulse into a mechanical pressure wave.

As can be seen from Figures 2 and 3, whatever their form, said generator means 63 or 64 are connected to the activation means 62 which activate them when the temperature of the diesel fuel within the filter 1 falls below a determined minimum threshold value dangerous for paraffin formation.

Said activation means 62 comprise a temperature sensor 66 arranged to measure the temperature of the diesel fuel within the filter 1 and to generate a corresponding electrical signal, and a processor 67 connected to said sensor 66 to activate the generator means 63 or 64 when said signal corresponds to said minimum threshold temperature value.

The temperature sensor 66 comprises a probe 68 fixed to the outer jacket 60 in the portion 6a contained within the inlet chamber 25, to hence measure the temperature of the diesel fuel present therein.

In use, the temperature sensor 66 continuously measures the temperature of the diesel fuel in the inlet chamber 25 by the probe 68, the temperature sensor 66 generating a corresponding electrical signal and transmitting it to the processor 67, said processor 67 being set to recognize when the electrical signal corresponds to a minimum threshold temperature value, below which there is a risk of paraffin formation (about -5°C).

When the temperature falls below said minimum threshold value, the signal processor 67 activates the generator means 63 or 64.

In the embodiment shown in Figure 2, the processor 67 activates the electric motor 63a which then rotates the eccentric mass 63c; whereas in the embodiment of Figure 3, the processor 67 feeds electric pulses to the piezoelectric device 64, which transforms them into pressure waves.

Once operating, and while the temperature remains below the threshold value, the generator means 63 or 64 are controlled such that they operate cyclically, such as to generate pressure waves which, at determined intervals, vibrate the diesel fuel molecules, to increase their kinetic energy and delay aggregation of the long chain molecules which give rise to paraffins.

If the device 6 is mounted with the elastic ring 61 interposed, said pressure waves propagate only through the diesel fuel (see Figure 4), whereas if the device is associated rigidly with the casing (see Figures 2 and 3) the pressure waves also vibrate the casing 3, however this does not create operating problems.

## Claims

1. A fuel filter (1) with antifreeze device comprising an outer casing (2), the interior (24) of which is separated by a filtering baffle (5) into two separate chambers (25, 26) to which a fuel inlet conduit (3) and a fuel outlet conduit (4) are connected respectively, and **characterised by** comprising a device (6) for generating pressure waves within the casing (2), such that said pressure waves propagate at least through the fuel contained in the interior (24), in order to increase its kinetic energy, said device (6) being activated in function of the value of temperature of the fuel measured by a temperature sensor.

2. A fuel filter (1) as claimed in claim 1, **characterised in that** at least a part (6a) of said device (6) is housed within said outer casing (2).

3. A fuel filter (1) as claimed in claim 2, **characterised in that** said at least a part (6a) of said device (6) housed within the casing (2) is positioned in the chamber (25) to which the fuel inlet conduit (3) is connected.

4. A fuel filter (1) as claimed in claim 2, **characterised in that** said device (6) is associated with the outer casing (2) in such a manner as to be partly inserted into the interior of said casing (2).

5. A fuel filter (1) as claimed in claim 4, **characterised in that** said device (6) is removably associated with the outer casing (2).

6. A fuel filter (1) as claimed in claim 1, **characterised in that** the outer casing (2) comprises a cup-shaped body (20) closed by a cover (21), said device (6) being associated with a hole (27) provided in said cover (21).

7. A fuel filter (1) as claimed in claim 4, **characterised in that** said device (6) is associated with the outer casing (2) by way of an interposed elastic element (61), so that the pressure waves propagate only through the fuel.

8. A fuel filter (1) as claimed in claim 4, **characterised in that** said device (6) is associated rigidly with the outer casing (2), so that the pressure waves cause the casing (2) to vibrate.

9. A fuel filter (1) as claimed in claim 1, **characterised in that** said device (6) comprises pressure wave generator means (63, 64), and activation means for activating said generator means (63, 64).

10. A fuel filter (1) as claimed in claim 9, **characterised in that** said generator means (63) comprise an electric motor (63a) and an eccentric mass (63c) which, when rotated by the motor (63a), produces vibration of the device (6), which in its turn generates pressure waves through the fuel.

11. A fuel filter (1) as claimed in claim 9, **characterised in that** said generator means comprise a piezoelectric device (64) arranged to transform an electric pulse into a mechanical pressure wave.

12. A fuel filter (1) as claimed in claim 9, **characterised in that** said generator means comprise an ultrasound emitter.

13. A fuel filter (1) as claimed in claim 1, **characterised in that** said temperature sensor is connected to said device trough said activation means (62), said temperature sensor (66) measuring the temperature of the fuel within the casing (2) and generating a corresponding electrical signal.

14. A Fuel filter (1) as claimed in claim 13, wherein said activation means comprises also a processor (67) for receiving the electric signal generated by the electric sensor and which activates the generator means (63, 64) when the temperature attains a minimum threshold value.

15. A fuel filter (1) as claimed in claim 9, **characterised in that** said device (6) comprises an outer jacket (60) which houses said generator means (63, 64) in its interior and is at least partly inserted into the interior of the filter casing (2).

16. A fuel filter (1) as claimed in claim 9, **characterised in that** said device (6) comprises an electrical generator(69) for its powering.

17. A fuel filter (1) as claimed in claim 9, **characterised in that** said device (6) is powered by the battery of the vehicle on which the filter (1) is mounted.

## Patentansprüche

1. Ein Kraftstofffilter mit einer Frostschutzvorrichtung, bestehend aus einem Außengehäuse (2), dessen Inneres (24) durch ein Filterleitblech (5) in zwei getrennte Kammern (25, 26) eingeteilt ist, an die jeweils eine Kraftstoffzulaufleitung (3) und eine Kraftstoffauslassleitung (4) angeschlossen sind, **dadurch gekennzeichnet, dass** eine Vorrichtung (6) zur Erzeugung von Druckwellen im Gehäuse (2) enthalten ist, so dass sich die Druckwellen wenigstens im Kraftstoff im Inneren (24) ausbreiten, um seine kinetische Energie zu steigern, wobei die Vorrichtung (6) in Abhängigkeit von den Temperaturwerten des Kraftstoffs betätigt wird, die durch einen Temperatursensor gemessen werden.

2. Ein Kraftstofffilter (1) nach Patentanspruch 1, **dadurch gekennzeichnet, dass** wenigstens ein Teil (6a) dieser Vorrichtung (6) von dem Außengehäuse (2) umschlossen wird.

3. Ein Kraftstofffilter (1) nach Patentanspruch 2, **dadurch gekennzeichnet, dass** dieser wenigstens eine Teil (6a) der Vorrichtung (6), der von dem Gehäuse (2) umschlossen wird, in der Kammer (25) liegt, an welche die Kraftstoffzulaufleitung (3) angeschlossen ist.

4. Ein Kraftstofffilter (1) nach Patentanspruch 2, **dadurch gekennzeichnet, dass** die Vorrichtung (6) so dem Außengehäuse (2) zugeordnet ist, dass sie teilweise in das Innere des Gehäuses (2) eingefügt ist.

5. Ein Kraftstofffilter (1) nach Patentanspruch 4, **dadurch gekennzeichnet, dass** die Vorrichtung (6) dem Außengehäuse (2) abnehmbar zugeordnet ist.

6. Ein Kraftstofffilter (1) nach Patentanspruch 1, **dadurch gekennzeichnet, dass** das Außengehäuse (2) einen kelchförmigen Körper (20) beinhaltet, der von einer Abdeckung (21) umschlossen ist, wobei die Vorrichtung (6) einem Loch (27) in der Abdeckung (21) zugeordnet ist.

7. Ein Kraftstofffilter (1) nach Patentanspruch 4, **dadurch gekennzeichnet, dass** die Vorrichtung (6) dem Außengehäuse (2) durch ein zwischengeschaltetes elastisches Element (61) zugeordnet ist, so dass sich die Druckwellen nur in dem Kraftstoff ausbreiten.

8. Ein Kraftstofffilter (1) nach Patentanspruch 4, **dadurch gekennzeichnet, dass** die Vorrichtung (6) dem Außengehäuse (2) starr zugeordnet ist, so dass die Druckwellen das Gehäuse (2) zum Schwingen bringen.

9. Ein Kraftstofffilter (1) nach Patentanspruch 1, **dadurch gekennzeichnet, dass** die Vorrichtung (6) Druckwellengeber (63, 64) und Betätigungsmittel zur Betätigung der Geber (63, 64) beinhaltet.

10. Ein Kraftstofffilter (1) nach Patentanspruch 9, **dadurch gekennzeichnet, dass** die Geber (63) einen elektrischen Motor (63a) und eine Exzentermasse (63c) beinhalten, welche bei Rotation durch den Motor (63a) eine Vibration der Vorrichtung (6) verursacht, die wiederum sich im Kraftstoff ausbreitende Druckwellen erzeugt.

11. Ein Kraftstofffilter (1) nach Patentanspruch 9, **dadurch gekennzeichnet, dass** die Geber eine piezoelektrische Vorrichtung (64) beinhalten, die so angeordnet ist, dass sie einen elektrischen Impuls in eine mechanische Druckwelle umwandelt.

12. Ein Kraftstofffilter (1) nach Patentanspruch 9, **dadurch gekennzeichnet, dass** die Gebereinrichtungen einen Ultraschallgeber beinhalten.

13. Ein Kraftstofffilter (1) nach Patentanspruch 1, **dadurch gekennzeichnet, dass** der Temperatursensor durch die Betätigungsmittel (62) mit der Vorrichtung verbunden ist, wobei der Temperatursensor (66) die Temperatur des Kraftstoffs im Gehäuse (2) misst und ein entsprechendes elektrisches Signal erzeugt.

14. Ein Kraftstofffilter (1) nach Patentanspruch 13, wobei die Betätigungsmittel ferner einen Prozessor (67) zum Empfangen des vom elektrischen Sensor erzeugten elektrischen Signals beinhalten, welcher die Geber (63, 64) betätigt, sobald die Temperatur einen Mindestgrenzwert erreicht.

15. Ein Kraftstofffilter (1) nach Patentanspruch 9, **dadurch gekennzeichnet, dass** die Vorrichtung (6) einen Außenmantel (60) beinhaltet, der die Geber (63, 64) in seinem Inneren umschließt und der wenigstens teilweise in das Innere des Filtergehäuses (2) eingefügt ist.

16. Ein Kraftstofffilter (1) nach Patentanspruch 9, **dadurch gekennzeichnet, dass** die Vorrichtung (6) einen elektrischen Generator (69) für die Energieversorgung beinhaltet.

17. Ein Kraftstofffilter (1) nach Patentanspruch 9, **dadurch gekennzeichnet, dass** die Vorrichtung (6) von der Batterie des Fahrzeugs betrieben wird, in das der Filter (1) eingebaut ist.

## Revendications

1. Un filtre à carburant (1) présentant un dispositif antigel comprenant une enveloppe extérieure (2), l'intérieur (24) de laquelle est séparé par un déflecteur de filtrage (5) en deux chambres séparées (25, 26) auxquelles un conduit d'entrée de carburant (3) et un conduit de sortie de carburant (4) sont reliés, **caractérisé par le fait qu'**il comprend un dispositif (6) de génération d'ondes de pression dans l'enveloppe (2), de sorte que lesdites ondes de pression se propagent au moins dans le carburant contenu dans l'intérieur (24), augmentant ainsi son énergie cinétique, ledit dispositif (6) étant activé en fonction de la valeur de la température du carburant mesurée par un capteur de température.

2. Un filtre à carburant (1) selon la revendication 1, **caractérisé par le fait qu'**au moins une partie (6a) dudit dispositif (6) est logée à l'intérieur de ladite enveloppe extérieure (2).

3. Un filtre à carburant (1) selon la revendication 2, **caractérisé par le fait qu'**au moins une partie (6a) dudit dispositif (6) logée à l'intérieur de ladite enveloppe extérieure (2) est positionnée dans la chambre (25) à laquelle le conduit d'entrée de carburant (3) est relié.

4. Un filtre à carburant (1) selon la revendication 2, **caractérisé par le fait que** ledit dispositif (6) est associé à l'enveloppe extérieure (2) de manière à être partiellement introduit à l'intérieur de ladite enveloppe (2).

5. Un filtre à carburant (1) selon la revendication 4, **caractérisé par le fait que** ledit dispositif (6) est associé de manière amovible à l'enveloppe extérieure (2).

6. Un filtre à carburant (1) selon la revendication 1, **caractérisé par le fait que** l'enveloppe extérieure (2) comprend un corps en forme de coupe (20) fermé par un couvercle (21), ledit dispositif (6) étant associé à un trou (27) pratiqué dans ledit couvercle (21).

7. Un filtre à carburant (1) selon la revendication 4, **caractérisé par le fait que** ledit dispositif (6) est associé à l'enveloppe extérieure (2) par l'intermédiaire d'un élément élastique interposé (61), afin que les ondes de pression se propagent uniquement à travers le carburant.

8. Un filtre à carburant (1) selon la revendication 4, **caractérisé par le fait que** ledit dispositif (6) est associé de manière rigide à l'enveloppe extérieure (2), afin que les ondes de pression entraînent la vibration de l'enveloppe (2).

9. Un filtre à carburant (1) selon la revendication 1, **caractérisé par le fait que** ledit dispositif (6) comprend des dispositifs de génération d'ondes de pression (63, 64) et des dispositifs d'activation pour activer lesdits dispositifs de génération (63, 64).

10. Un filtre à carburant (1) selon la revendication 9, **caractérisé par le fait que** lesdits dispositifs de génération (63) comprennent un moteur électrique (63a) et une masse excentrique (63c) que le moteur (63a) fait tourner pour produire la vibration du dispositif (6) qui génère à son tour les ondes de pression à travers le carburant.

11. Un filtre à carburant (1) selon la revendication 9, **caractérisé par le fait que** lesdits dispositifs de génération comprennent un dispositif piézoélectrique (64) disposé de manière à transformer une impulsion électrique en onde de pression mécanique.

12. Un filtre à carburant (1) selon la revendication 9, **caractérisé par le fait que** lesdits dispositifs de génération comprennent un émetteur d'ultrasons.

13. Un filtre à carburant (1) selon la revendication 1, **caractérisé par le fait que** ledit capteur de température (66) est relié audit dispositif par l'intermédiaire desdits dispositifs d'activation (62), ledit capteur de température (66) mesurant la température du carburant à l'intérieur de l'enveloppe (2) et générant un signal électrique correspondant.

14. Un filtre à carburant (1) selon la revendication 13, où lesdits dispositifs d'activation comprennent également un processeur (67) qui reçoit le signal électrique généré par le capteur électrique et qui active les dispositifs de génération (63, 64) lorsque la température atteint une valeur de seuil minimum.

15. Un filtre à carburant (1) selon la revendication 9, **caractérisé par le fait que** ledit dispositif (6) comprend une chemise extérieure (60) qui contient lesdits dispositifs de génération (63, 64) à son intérieur et qui est au moins partiellement introduite à l'intérieur de l'enveloppe du filtre (2).

16. Un filtre à carburant (1) selon la revendication 9, **caractérisé par le fait que** ledit dispositif (6) comprend un générateur électrique (69) pour son alimentation.

17. Un filtre à carburant (1) selon la revendication 9, **caractérisé par le fait que** ledit dispositif (6) est alimenté par la batterie du véhicule sur lequel le filtre (1) est monté.
